# EUROPEAN PATENT SPECIFICATION

(11) **EP 2 661 048 B1**
(45) Date of publication and mention of the grant of the patent: **23.03.2016**
(21) Application number: 13164537.6
(22) Date of filing: 19.04.2013
(51) Int. Cl.: H04L 12/709, H04L 12/703, H04L 12/725, H04L 29/06, H04L 29/14

(54) **PROCESSING METHOD AND APPARATUS FOR MEMBER LINK IN MULTILINK GROUP**
VERARBEITUNGSVERFAHREN AND VORRICHTUNG FÜR MITGLIEDVERBINDUNG IN EINER MEHRFACHVERBINDUNGSGRUPPE
PROCÉDÉ DE TRAITEMENT ET APPAREIL POUR LIAISON MEMBRE DANS UN GROUPE DE MULTILIAISONS

(30) Priority: 04.05.2012 CN 201210137166
(43) Date of publication of application: 06.11.2013
(73) Proprietor: Huawei Technologies Co., Ltd., Longgang District Shenzhen, Guangdong 518129 (CN)
(72) Inventor: Zhang, Yahao, 518129 Shenzhen (CN); Zhang, Yanhong, 518129 Shenzhen (CN); Zhao, Daguan, 518129 Shenzhen (CN); Cai, Hengguang, 518129 Shenzhen (CN)
(74) Representative: Gill Jennings & Every LLP

(56) References cited:
- WO-A1-2010/114440
- US-A1- 2004 107 382
- US-A1- 2006 291 476
- US-A1- 2009 323 520

## Description

### FIELD OF THE INVENTION

The present invention relates to the field of communications technologies, and in particular to a processing method and apparatus for a member link in a multilink group.

### BACKGROUND OF THE INVENTION

A multilink group refers to a virtual link group that is formed by binding multiple links with a same source address and destination address. Between the source address and the destination address, a sum of bandwidths of all member links is available bandwidth of the multilink group. Therefore, the multilink group is capable of increasing the available bandwidth of the multilink group by increasing a member link, thereby implementing load sharing, backup and protection.

Relatively common multilink groups: for example, are the Multilink Point to Point Protocol (full name in English is Multilink Point to Point Protocol, referred to as MLPPP), an inverse multiplexing for asynchronous transfer mode (full name in English is Inverse Multiplexing for Asynchronous Transfer Mode, referred to as IMA), and a link aggregation group (full name in English is Link Aggregation Group, referred to as LAG).

US 2009/323520 discloses methods associated with Bidirectional Forwarding Detection (BFD) on multilink bundled interfaces. A separate BFD session is conducted over each link of the multiple bundled communication links, and in response to a BFD-detected failure condition, the use of the one or more links or the entire bundled interface is removed from service.US 2006/291476 discloses a method which enables implementing a scalable, carrier class bounding multiplexed data communication on low rate links.

However, in the prior art, only when a member link in the multilink group is unavailable, data traffic, which was transmitted through the unavailable member link, is switched to another member link for transmission. In this case, it is unavoidable that transmission of the data traffic is interrupted, thereby affecting service stability.

### SUMMARY OF THE INVENTION

In view of this, the present invention provides a processing method for a member link in a multilink group and a related apparatus, thereby implementing a dynamic adjustment to a member link in a multilink group.

In one aspect, the present invention provides a processing method for a member link in a multilink group, where the method includes:
determining a status of an available member link in a multilink group;
adjusting the multilink group according to the status of the available member link;
after the adjusting the multilink group according to the status of the available member link, calculating a current bandwidth utilization ratio of the multilink group; and
determining whether the calculated bandwidth utilization ratio exceeds a bandwidth threshold, and if yes, performing protection switching, in the protection switching, data traffic transmitted through the multilink group is switched to a protective multilink group for transmission;
wherein the adjusting the multilink group according to the status of the available member link comprises:
   if transmission quality of at least one member link among the available member link fails to meet a preset condition, removing the member link whose transmission quality fails to meet the preset condition from the multilink group.

In another aspect, the present invention provides a processing apparatus for a member link in a multilink group, where the apparatus includes:
a status determining module, configured to determine a status of an available member link in a multilink group;
a dynamic adjusting module, configured to adjust the multilink group according to the status of the available member link;
a calculating module, configured to calculate, after the dynamic adjusting module adjusting the multilink group, a current bandwidth utilization ratio of the multilink group;
a judging module, configured to determine whether the current bandwidth utilization ratio exceeds a bandwidth threshold; and
an overload processing module, configured to trigger protection switching if the judging module determines that the current bandwidth utilization ratio exceeds the bandwidth threshold, in the protection switching, data traffic transmitted through the multilink group is switched to a protective multilink group for transmission;
wherein the status determining module comprises:
   an available member determining unit, configured to determine the available member link in the multilink group; and
   a first transmission quality determining unit, configured to determine whether transmission quality of the available member link meets a preset condition;
wherein the dynamic adjusting module comprises:
   a removing unit, configured to remove a member link among the available member link whose transmission quality fails to meet the preset condition from the multilink group if the first transmission quality determining unit determines that transmission quality of the member link fails to meet the preset condition.

According to the method and the related apparatus provided in the embodiments of the present invention, a status of a member link in a multilink group is detected, and the multilink group is adjusted dynamically according to the status of the member link, thereby ensuring normal data transmission and improving service stability.

### BRIEF DESCRIPTION OF THE DRAWINGS

To describe the technical solutions in the embodiments of the present invention more clearly, the accompanying drawings required for describing the embodiments are introduced briefly in the following. Apparently, the accompanying drawings in the following description show merely some embodiments of the present invention, and persons of ordinary skill in the art may still derive other drawings from these accompanying drawings without creative efforts.
FIG. 1 is a flowchart of a processing method for a member link in a multilink group according to an embodiment of the present invention;
FIG. 2a and FIG. 2b are flowcharts of another processing method for a member link in a multilink group according to an embodiment of the present invention;
FIG. 3 is a flowchart of another processing method for a member link in a multilink group according to an embodiment of the present invention;
FIG. 4 is a flowchart of another processing method for a member link in a multilink group according to an embodiment of the present invention;
FIG. 5 is a flowchart of another processing method for a member link in a multilink group according to an embodiment of the present invention;
FIG. 6 is a schematic diagram of time stamps for a delay detection packet according to an embodiment of the present invention;
FIG. 7 is a schematic structural diagram of a processing apparatus for a member link in a multilink group according to an embodiment of the present invention;
FIG. 8a and FIG. 8b are schematic structural diagrams of another processing apparatus for a member link in a multilink group according to an embodiment of the present invention;
FIG. 9 is a schematic structural diagram of another processing apparatus for a member link in a multilink group according to an embodiment of the present invention; and
FIG. 10 is a schematic structural diagram of another processing apparatus for a member link in a multilink group according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are merely a part rather than all of the embodiments of the present invention.

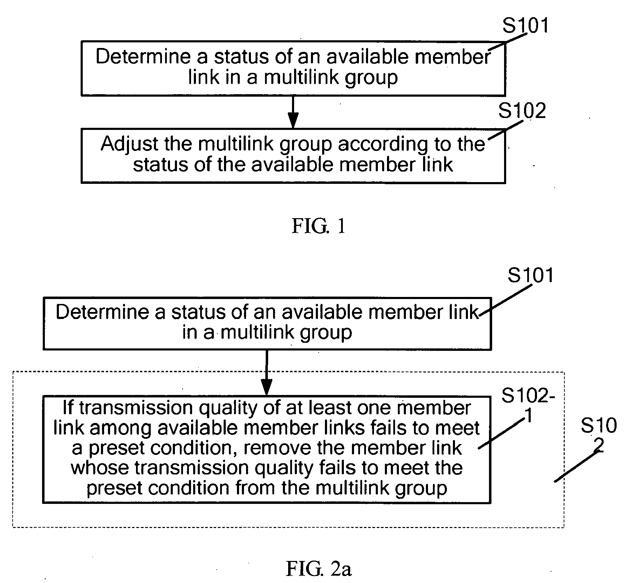

An embodiment of the present invention provides a processing method for a member link in a multilink group, and as shown in FIG. 1, the method includes:
S101. Determine a status of an available member link in a multilink group.

It should be understood that an entity of implementing this embodiment of the present invention may be a network transmission processing device, such as a packet transport network (full name in English is Packet Transport Network, referred to as PTN) device or another network device.

S102. Adjust the multilink group according to the status of the available member link.

According to the method provided in this embodiment of the present invention, a status of a member link is determined by detecting a status of an available member link, and a multilink group is dynamically adjusted, thereby ensuring normal data transmission and improving service stability.

Optionally, as shown in FIG. 2a, the adjusting the multilink group according to the status of the available member link (S102) may include:
S102-1. If transmission quality of at least one member link among available member links fails to meet a preset condition, remove the member link whose transmission quality fails to meet the preset condition from the multilink group.

Optionally, in a case where a member link is available, a status of the member link may be reflected by using transmission quality of the member link. A relatively common parameter for measuring the transmission quality of the member link is: for example, a link delay, or signal strength, or a bit error rate.

Optionally, the preset condition may be a transmission quality parameter threshold, such as a delay threshold, or a signal threshold, or a bit error rate threshold. When a delay of a certain member link is greater than the delay threshold, or signal strength of the member link is lower than the signal threshold, or a bit error rate of the member link is greater than the bit error rate threshold, it can be considered that the transmission quality of the member link fails to meet the preset condition; otherwise, it can be considered that the transmission quality of the member link meets the preset condition.

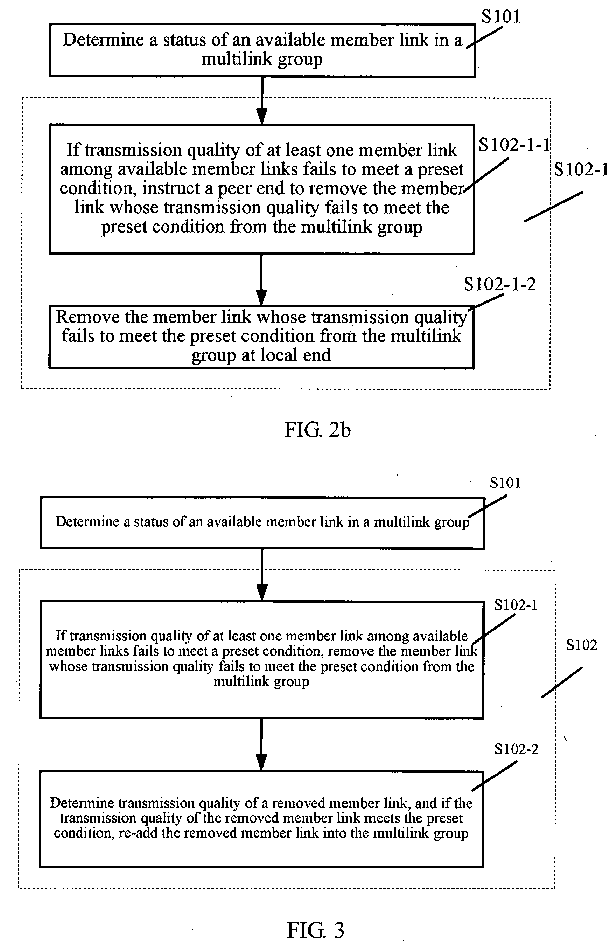

According to an optional embodiment of the present invention, to avoid a case where a member link whose transmission quality fails to meet the preset condition has been removed at a local end, but a peer end still sends data traffic through the member link whose transmission quality fails to meet the preset condition, as shown in FIG. 2b, the removing the member link whose transmission quality fails to meet the preset condition from the multilink group (S102-1) may include:
S102-1-1. Instruct the peer end to remove the member link whose transmission quality fails to meet the preset condition from the multilink group; and
S102-1-2. Remove the member link whose transmission quality fails to meet the preset condition from the multilink group at the local end.

Optionally, as shown in FIG. 3, after S102-1, this embodiment of the present invention may further include:
S102-2. Determine transmission quality of a removed member link. If the transmission quality of the removed member link meets the preset condition, re-add the removed member link into the multilink group.

It may be understood that, when transmission quality of a member link fails to meet a preset condition, removing the member link from the multilink group may cause that an available bandwidth of the multilink group decreases correspondingly. Subsequently, a status of the removed member link is re-determined. If transmission quality of the removed member link meets the preset condition, the removed member link can be added into the multilink group in time, so as to ensure that the available bandwidth of the multilink group increases in time, thereby ensuring transmission efficiency.

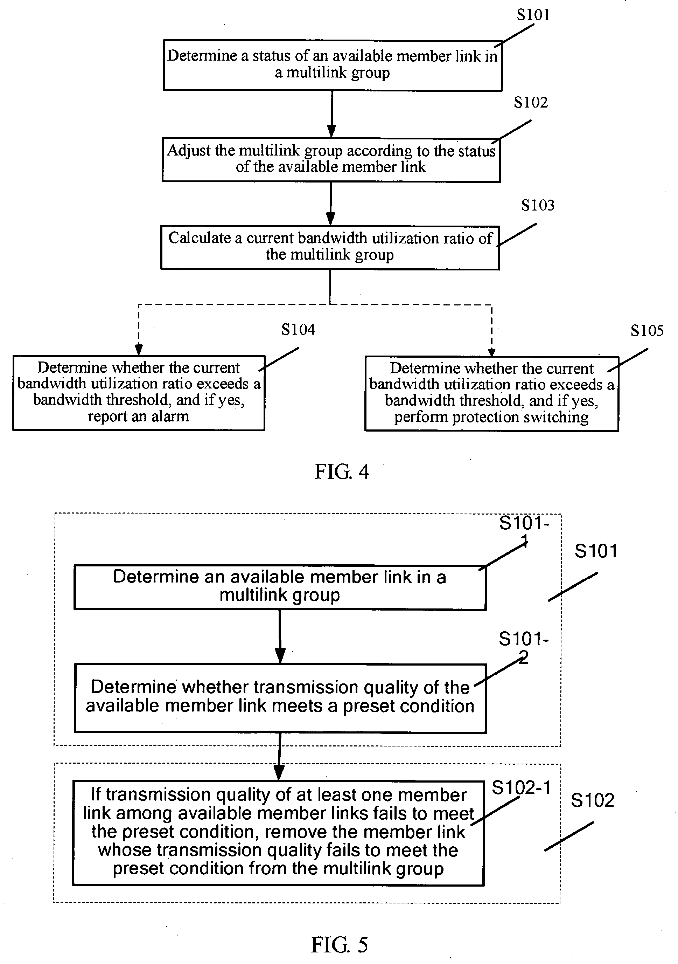

Optionally, as shown in FIG. 4, after S102, this embodiment of the present invention may further include:
S103. Calculate a current bandwidth utilization ratio of the multilink group, where the current bandwidth utilization ratio refers to a ratio of data traffic currently transmitted through the multilink group to the available bandwidth of the multilink group.

Further optionally, after S103, this embodiment of the present invention may further include:
S104. Determine whether the current bandwidth utilization ratio exceeds a bandwidth threshold. If yes, report an alarm.

Alternatively, after S103, this embodiment of the present invention may further include:
S105. Determine whether the current bandwidth utilization ratio exceeds a bandwidth threshold. If yes, perform protection switching.

For example, data traffic transmitted through the multilink group may be switched to a protective multilink group for transmission.

By taking an MLPPP as an example, the protection switching means that the data traffic is switched from a current MLPPP to another MLPPP or another network channel that is capable of replacing the current MLPPP for transmission. For example, a protection switching command may be delivered by using software.

To facilitate description, FIG. 4 shows S103, S104, and S105 at the same time.

After the member link in the multilink group is dynamically adjusted, for example, after the member link whose transmission quality fails to meet the preset condition is removed, the available bandwidth of the multilink group may decrease correspondingly. Therefore, whether an overload situation occurs can be determined by calculating the current bandwidth utilization ratio of the multilink group. When an overload situation occurs, corresponding processing (reporting an alarm or performing protection switching) can be performed in time, thereby further improving service stability.

Optionally, as shown in FIG. 5, the determining a status of an available member link in a multilink group (S101) may include:
S101-1. Determine the available member link in the multilink group.

Optionally, the following method may be used to determine whether a member link is available: Determine whether a link alarm defined in an alarm detection standard of an E1 system is detected; if a link alarm is detected, it is considered that a member link corresponding to the link alarm is unavailable, for example, a cable is broken, or a connector for connecting cables is damaged. The E1 system is recommended by the International Telecommunication Union-Telecommunication Standardization Sector (full name in English is International Telecommunication Union-Telecommunication Standardization Sector, referred to as ITU-T), and in the alarm detection standard of the E1 system, various link alarms are defined. Therefore, whether a physical failure occurs to a link may be determined by detecting these link alarms.

It should be noted that the link alarms defined in the alarm detection standard of the E1 system correspond to links in a one-to-one manner. If multiple links fail, each link reports a link alarm.

S101-2. Determine whether transmission quality of the available member link meets a preset condition.

If transmission quality of a certain available member link meets the preset condition, data traffic may continue to be transmitted through the member link. If transmission quality of a certain member link fails to meet the preset condition, perform S102-1.

Optionally, determining the status of the available member link may be determining a status of each member link one by one, and may also be simultaneously determining a status of all member links.

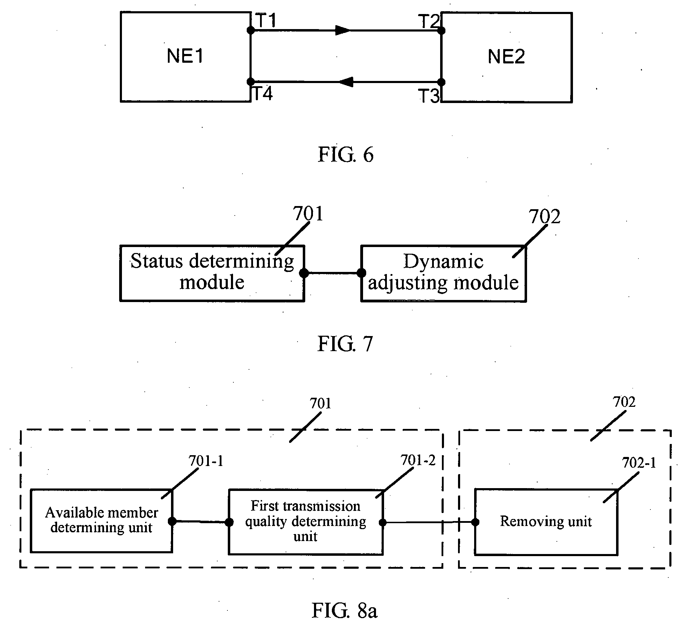

Optionally, when a link delay is used to measure transmission quality of a member link, a link delay of the member link may be obtained by using the following method:
Referring to FIG. 6, FIG. 6 is a schematic diagram for calculating a link delay, in which a network element (full name in English is Network Element, referred to as NE) 1 and an NE2 are two communication ends. T1, T2, T3, and T4 represent time stamps. In this example, assume that the NE1 sends a delay detection request packet to the NE2. When the delay detection request packet is to leave the NE1, the NE1 adds a time stamp T1 to the delay detection request packet. Upon receiving the delay detection request packet, the NE2 adds a time stamp T2, and the NE2 replies to the NE1 with a delay detection response packet. In the same way, when the delay detection response packet is to leave the NE2, the NE2 adds a time stamp T3 to the delay detection response packet. The delay detection response packet also carries the time stamps T1 and T2. Upon receiving the delay detection response packet, the NE1 adds a time stamp T4, and then the NE1 calculates a link delay between the NE1 and the NE2 according to the time stamps. It should be noted that, in this case, what is calculated by the NE1 is a bidirectional link delay between the NE1 and the NE2.

The bidirectional link delay between the NE1 and the NE2 is as follows: T = (T2 - T1) + (T4 - T3) + ΔT, where ΔT is a difference value between a clock of the NE1 and a clock of the NE2, which may be positive, and may also be negative. When a clock of the NE1 and that of the NE2 are synchronous, ΔT is 0. After a bidirectional link delay of a member link is obtained, the bidirectional link delay of the member link is compared with a delay threshold to determine whether transmission quality of the member link meets a preset condition.

Of course, a unidirectional link delay between the NE1 and the NE2 may also be used to measure the transmission quality of the member link, where the unidirectional link delay is as follows: T = (T2 - T1) +ΔT.

Optionally, because clocks of two network elements may not be synchronous in practice, the delay threshold may also be a relative delay threshold. Determining whether the transmission quality of the member link meets the preset condition may be: comparing link delays of member links to obtain a minimum value of a link delay (which is marked as T0); calculating a difference between a link delay (which is marked as T) of another member link and the minimum value of the link delay, where the difference is marked as ΔT'= T - T0; and finally comparing ΔT' with a relative delay threshold. If ΔT' is greater than the relative delay threshold, it can be considered that the transmission quality of the member link fails to meet the preset condition. On the contrary, if ΔT' is smaller than the relative delay threshold, it can be considered that the transmission quality of the member link meets the preset condition.

Optionally, when signal strength is used to measure transmission quality of a member link, signal strength of the member link may be obtained by using the following method:
Detect signal strength of a member link. When the signal strength is lower than a minimum threshold that can be identified by a hardware system, it may cause that data cannot be restored, so that a packet may be lost. In this case, it can be considered that transmission quality of the member link fails to meet the preset condition. For example, the hardware system detects the signal strength in real time and stores a signal strength value in a logical register. A software system reads a signal strength value from the logical register at a regular interval and compares the signal strength value with a set signal threshold. If the signal strength is continuously lower than the set signal threshold in a set time period, it is considered that the transmission quality of the member link fails to meet the preset condition.

Optionally, when a bit error rate is used to measure transmission quality of a member link, a bit error rate of the member link may be obtained by using the following method:
Calculate a cyclical redundancy check (full name in English is Cyclical Redundancy Check, referred to as CRC) according to a received packet of data traffic, and compare the calculated CRC with a CRC carried in the received packet of data traffic. If the two are not equal, it is determined that a bit error occurs. A bit error rate of a member link refers to the number of bit errors per unit time. When the bit error rate of the member link is greater than an error rate threshold, it is considered that transmission quality of the member link fails to meet the preset condition.

It can be known from the foregoing that, according to the method provided in this embodiment of the present invention, a status of a member link is determined by detecting a status of an available member link, and a multilink group is dynamically adjusted, thereby ensuring normal data transmission and improving service stability. In addition, after a member link in the multilink group is dynamically adjusted, whether an overload situation occurs can be determined by calculating a current bandwidth utilization ratio of the multilink group. When an overload situation occurs, corresponding processing (reporting an alarm or performing protection switching) can be performed in time, thereby further improving service stability.

To better implement the technical solutions in this embodiment of the present invention, an embodiment of the present invention further provides an apparatus that is configured to implement the foregoing processing method for a member link in a multilink group. The meaning of each term in this embodiment is the same as that of each term involved in the foregoing processing method for a member link in a multilink group. For specific implementation details, reference may be made to the description in the method embodiments.

An embodiment of the present invention provides a processing apparatus for a member link in a multilink group. Referring to FIG. 7, FIG. 7 is a schematic structural diagram of the apparatus, which includes:
A status determining module 701 is configured to determine a status of an available member link in a multilink group.

It may be understood that the processing apparatus for a member link in a multilink group provided in this embodiment of the present invention may be a network transmission processing device, such as a PTN device or another network device.

A dynamic adjusting module 702 is configured to adjust the multilink group according to the status of the available member link.

The processing apparatus provided in this embodiment of the present invention determines a status of a member link by detecting a status of an available member link and dynamically adjusts a multilink group, thereby ensuring normal data transmission and improving service stability.

Optionally, as shown in FIG. 8a, the status determining module 701 in this embodiment of the present invention may include:
an available member determining unit 701-1, configured to determine the available member link in the multilink group; and
a first transmission quality determining unit 701-2, configured to determine whether transmission quality of the available member link meets a preset condition.

Optionally, the following method may be used to determine whether the member link is available: Determine whether a link alarm defined in an alarm detection standard of an E1 system is detected. If a link alarm is detected, it is considered that a member link corresponding to the link alarm is unavailable, for example, a cable is broken, or a connector for connecting cables is damaged.

If a certain available member link meets the preset condition, data traffic may continue to be transmitted through the member link. If a certain member link fails to meet the preset condition, the dynamic adjusting module 702 is triggered.

Optionally, determining the status of the available member link may be determining a status of each member link one by one, and may also be simultaneously determining a status of all member links.

Optionally, in a case where a member link is available, a status of the member link may be reflected by using transmission quality of the member link. A relatively common parameter for measuring the transmission quality of the member link is: for example, a link delay, or signal strength, or a bit error rate.

Optionally, the preset condition may be a transmission quality parameter threshold, such as a delay threshold, or a signal threshold, or a bit error rate threshold. When a delay of a certain member link is greater than the delay threshold, or signal strength of the member link is lower than the signal threshold, or a bit error rate of the member link is greater than the bit error rate threshold, it can all be considered that the transmission quality of the member link fails to meet the preset condition; otherwise, it can be considered that the transmission quality of the member link meets the preset condition.

It may be understood that, in this embodiment of the present invention, a link delay, signal strength, or a data error rate may be used to measure the transmission quality of the member link. For a specific implementation procedure, reference may be made to the related description in the foregoing method embodiments. Details are not repeated herein.

Optionally, as shown in FIG. 8a, if the first transmission quality determining unit 701-2 determines that transmission quality of at least one member link among available member links fails to meet the preset condition, the dynamic adjusting module 702 may include a removing unit 702-1, configured to remove the member link whose transmission quality fails to meet the preset condition from the multilink group.

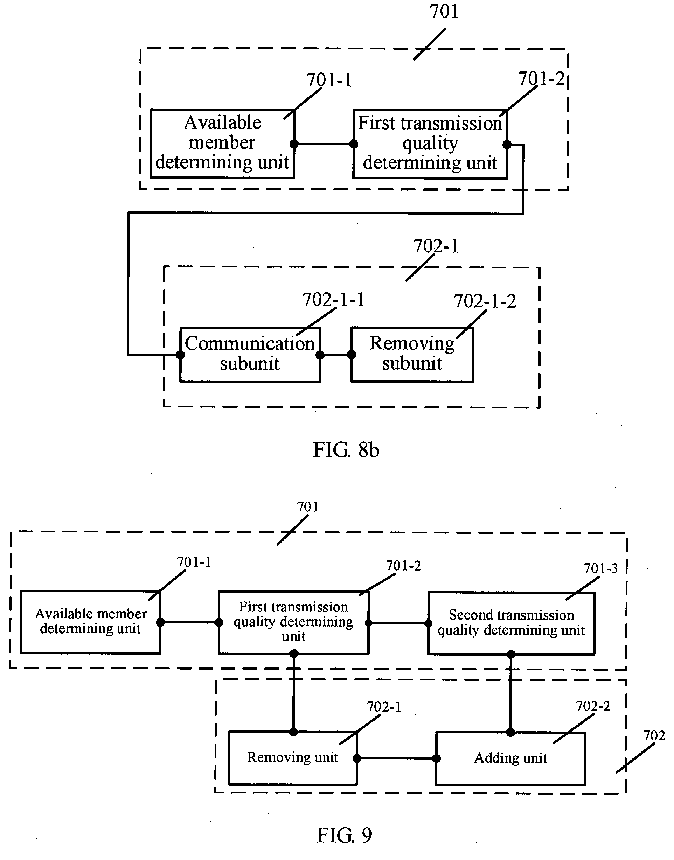

In an optional embodiment of the present invention, to avoid a case where a member link whose transmission quality fails to meet the preset condition has been removed at a local end, but a peer end still sends data traffic through the member link whose transmission quality fails to meet the preset condition, as shown in FIG. 8b, the removing unit 702-1 may include:
a communication subunit 702-1-1, configured to instruct the peer end to remove the member link whose transmission quality fails to meet the preset condition from the multilink group; and
a removing subunit 702-1-2, configured to remove the member link whose transmission quality fails to meet the preset condition from the multilink group at the local end.

Optionally, as shown in FIG. 9, after the removing unit 702-1 removes the member link whose transmission quality fails to meet the preset condition from the multilink group, the status determining module 701 may further include:
a second transmission quality determining unit 701-3, configured to determine whether transmission quality of a removed member link meets the preset condition; and
if the transmission quality of the removed member link meets the preset condition, the dynamic adjusting module 702 may further include:
an adding unit 702-2, configured to re-add the removed member link into the multilink group.

It may be understood that, when transmission quality of a member link fails to meet a preset condition, removing the member link from a multilink group may cause that an available bandwidth of the multilink group decreases correspondingly. Subsequently, a status of the removed member link is re-determined. If transmission quality of the removed member link meets the preset condition, the removed member link can be added into the multilink group in time, so as to ensure that the available bandwidth of the multilink group increases in time, thereby ensuring transmission efficiency.

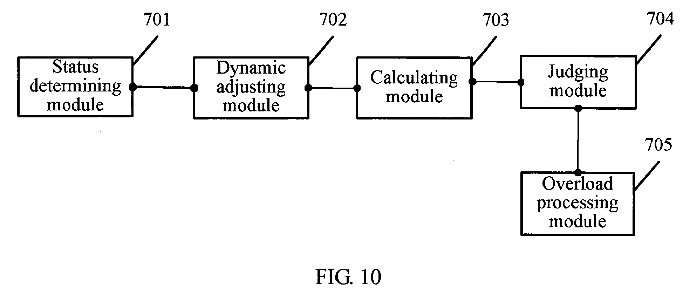

Optionally, as shown in FIG. 10, the processing apparatus provided in this embodiment of the present invention may further include a calculating module 703. After the dynamic adjusting module 702 adjusts the multilink group, the calculating module 703 is configured to calculate a current bandwidth utilization ratio of the multilink group, where the current bandwidth utilization ratio refers to a ratio of data traffic currently transmitted through the multilink group to the available bandwidth of the multilink group.

Further optionally, the processing apparatus provided in this embodiment of the present invention may further include a judging module 704. After the calculating module 703 calculates the current bandwidth utilization ratio of the multilink group, the judging module 704 is configured to determine whether the bandwidth utilization ratio calculated by the calculating module 703 exceeds a bandwidth threshold. If the judging module 704 determines that the current bandwidth utilization ratio exceeds the bandwidth threshold, the apparatus may further include an overload processing module 705, configured to report an alarm or trigger protection switching.

In the protection switching, data traffic transmitted through the multilink group may be switched to a protective multilink group for transmission. To facilitate description, FIG. 10 shows the calculating module 703, the judging module 704, and the overload processing module 705 at the same time.

After the member link in the multilink group is dynamically adjusted, for example, after the member link whose transmission quality fails to meet the preset condition is removed, the available bandwidth of the multilink group may decrease correspondingly. Therefore, whether an overload situation occurs can be determined by calculating the current bandwidth utilization ratio of the multilink group. When an overload situation occurs, corresponding processing (reporting an alarm or performing protection switching) can be performed in time, thereby further improving service stability.

It can be known from the foregoing that, the apparatus provided in this embodiment of the present invention determines a status of a member link by detecting a status of an available member link and dynamically adjusts a multilink group, thereby ensuring normal data transmission and improving service stability. In addition, after a member link in the multilink group is dynamically adjusted, whether an overload situation occurs can be determined by calculating a current bandwidth utilization ratio of the multilink group. When an overload situation occurs, corresponding processing (reporting an alarm or performing protection switching) can be performed in time, thereby further improving service stability.

It may be clearly understood by persons skilled in the art that, for the purpose of convenient and brief description, for a detailed working process of the foregoing system, apparatus and unit, reference may be made to corresponding process in the method embodiments, and the details are not repeated herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to an actual need to achieve the objectives of the solutions in the embodiments.

In addition, functional units in the embodiments of the present invention may be integrated into one processing unit, or each of the units may exist alone physically, or two or more units are integrated into one unit. The integrated unit may be implemented in the form of hardware, or may be implemented in the form of a software functional unit.

When the integrated units are implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to execute all or a part of steps of the methods described in the embodiments of the present invention. The storage medium includes: any medium that can store program codes, such as a USB flash disk, a removable hard disk, a read-only memory (full name in English is Read-Only Memory, referred to as ROM), a random access memory (full name in English is Random Access Memory, referred to as RAM), a magnetic disk, or an optical disk.

The processing method and apparatus for a member link in a multilink group provided in the present invention are described in detail in the foregoing. Persons skilled in the art may make variations to the specific implementation manner and application scope according to the embodiments of the present invention.

## Claims

1. A processing method for a member link in a multilink group, comprising:
determining (S101) a status of an available member link in a multilink group; adjusting (S102) the multilink group according to the status of the available member link;
wherein the adjusting (S102) the multilink group according to the status of the available member link comprises:
if transmission quality of at least one member link among the available member link fails to meet a preset condition, removing (S102-1) the member link whose transmission quality fails to meet the preset condition from the multilink group;
after the adjusting (S102) the multilink group according to the status of the available member link, calculating (S103) a current bandwidth utilization ratio of the multilink group; and
determining (S105) whether the calculated bandwidth utilization ratio exceeds a bandwidth threshold, and if yes, performing protection switching, whereby in the protection switching, data traffic transmitted through the multilink group is switched to a protective multilink group for transmission.

2. The method according to claim 1, wherein the removing (S102-1) the member link whose transmission quality fails to meet the preset condition from the multilink group comprises:
instructing (S102-1-1) a peer end to remove the member link whose transmission quality fails to meet the preset condition from the multilink group; and
removing (S102-1-2) the member link whose transmission quality fails to meet the preset condition from the multilink group at local end.

3. The method according to claim 1, after the removing (S102-1) the member link whose transmission quality fails to meet the preset condition from the multilink group, comprising:
determining (S102-2) transmission quality of a removed member link, and if the transmission quality of the removed member link meets the preset condition, re-adding the removed member link into the multilink group.

4. The method according to any one of claims 1 to 3, wherein the determining (S101) a status of an available member link in a multilink group comprises:
determining (S101-1) the available member link in the multilink group; and
determining (S101-2) whether transmission quality of the available member link meets the preset condition.

5. A processing apparatus for a member link in a multilink group, comprising:
a status determining module (701), configured to determine a status of an available member link in a multilink group;
wherein the status determining module (701) comprises:
an available member determining unit (701-1), configured to determine the available member link in the multilink group; and
a first transmission quality determining unit (701-2), configured to determine whether transmission quality of the available member link meets a preset condition;
a dynamic adjusting module (702), configured to adjust the multilink group according to the status of the available member link;
wherein the dynamic adjusting module comprises:
a removing unit (702-1), configured to remove a member link among the available member link whose transmission quality fails to meet the preset condition from the multilink group if the first transmission quality determining unit determines that transmission quality of the member link fails to meet the preset condition;
a calculating module (703), configured to calculate, after the dynamic adjusting module adjusting the multilink group, a current bandwidth utilization ratio of the multilink group;
a judging module (704), configured to determine whether the current bandwidth utilization ratio exceeds a bandwidth threshold; and
an overload processing module (705), configured to trigger protection switching if the judging module determines that the current bandwidth utilization ratio exceeds the bandwidth threshold, whereby in the protection switching, data traffic transmitted through the multilink group is switched to a protective multilink group for transmission.

6. The apparatus according to claim 5, wherein the removing unit (702-1) comprises:
a communication subunit (702-1-1), configured to instruct a peer end to remove the member link whose transmission quality fails to meet the preset condition from the multilink group; and
a removing subunit (702-1-2), configured to remove the member link whose transmission quality fails to meet the preset condition from the multilink group at local end.

7. The apparatus according to claim 5, wherein the status determining module (701) further comprises:
a second transmission quality determining unit (701-3), configured to determine whether transmission quality of a removed member link meets the preset condition; and
if the transmission quality of the removed member link meets the preset condition, the dynamic adjusting module (702) further comprises:
an adding unit (702-2), configured to re-add the removed member link into the multilink group.

## Patentansprüche

1. Verarbeitungsverfahren für eine Mitgliedsstrecke in einer Mehrstreckengruppe, die Folgendes umfasst:
Bestimmen (S101) eines Status einer verfügbaren Mitgliedsstrecke in einer Mehrstreckengruppe; Anpassen (S102) der Mehrstreckengruppe gemäß dem Status der verfügbaren Mitgliedsstrecke;
wobei das Anpassen (S102) der Mehrstreckengruppe gemäß dem Status der verfügbaren Mitgliedsstrecke Folgendes umfasst:
falls die Übertragungsqualität wenigstens einer Mitgliedsstrecke aus der verfügbaren Mitgliedsstrecke eine voreingestellte Bedingung nicht erfüllt, Herausnehmen (S102-1) der Mitgliedsstrecke, deren Übertragungsqualität nicht die voreingestellte Bedingung erfüllt, aus der Mehrstreckengruppe;
nach dem Anpassen (S102) der Mehrstreckengruppe gemäß dem Status der verfügbaren Mitgliedsstrecke, Berechnen (S103) einer aktuellen Bandbreitenauslastung der Mehrstreckengruppe; und
Bestimmen (S105), ob die berechnete Bandbreitenauslastung einen Bandbreitenschwellenwert übersteigt, und falls ja, Ausführen von Schutzumschaltung, wodurch in der Schutzumschaltung Datenverkehr, der durch die Mehrstreckengruppe übertragen wird, zu einer Schutz-Mehrstreckengruppe zur Übertragung umgeschaltet wird.

2. Verfahren nach Anspruch 1, wobei das Herausnehmen (S102-1) der Mitgliedsstrecke, deren Übertragungsqualität die voreingestellte Bedingung nicht erfüllt, aus der Mehrstreckengruppe Folgendes umfasst:
Anweisen (S102-1-1) eines "Peer"-Endes, die Mitgliedsstrecke, deren Übertragungsqualität die voreingestellte Bedingung nicht erfüllt, aus der Mehrstreckengruppe herauszunehmen; und
Herausnehmen (S102-1-2) der Mitgliedsstrecke, deren Übertragungsqualität die voreingestellte Bedingung nicht erfüllt, aus der Mehrstreckengruppe an dem lokalen Ende.

3. Verfahren nach Anspruch 1, das nach dem Herausnehmen (S02-1) der Mitgliedsstrecke, deren Übertragungsqualität die voreingestellte Bedingung nicht erfüllt, aus der Mehrstreckengruppe Folgendes umfasst:
Bestimmen (S102-2) der Übertragungsqualität einer herausgenommenen Mitgliedsstrecke, und falls die Übertragungsqualität der herausgenommenen Mitgliedsstrecke die voreingestellte Bedingung erfüllt, erneutes Hinzufügen der herausgenommenen Mitgliedsstrecke in die Mehrstreckengruppe.

4. Verfahren nach einem der Ansprüche 1 bis 3, wobei das Bestimmen (S101) eines Status einer verfügbaren Mitgliedsstrecke in einer Mehrstreckengruppe Folgendes umfasst:
Bestimmen (S101-1) der verfügbaren Mitgliedsstrecke in der Mehrstreckengruppe; und
Bestimmen (S101-2), ob die Übertragungsqualität der verfügbaren Mitgliedsstrecke die voreingestellte Bedingung erfüllt.

5. Verarbeitungsvorrichtung für eine Mitgliedsstrecke in einer Mehrstreckengruppe, die Folgendes umfasst:
ein Statusbestimmungsmodul (701), das konfiguriert ist, einen Status einer verfügbaren Mitgliedsstrecke in einer Mehrstreckengruppe zu bestimmen;
wobei das Statusbestimmungsmodul (701) Folgendes umfasst:
eine Bestimmungseinheit (701-1) für verfügbare Mitglieder, die konfiguriert ist, die verfügbare Mitgliedsstrecke in der Mehrstreckengruppe zu bestimmen; und
eine erste Übertragungsqualitätsbestimmungseinheit (701-2), die konfiguriert ist zu bestimmen, ob die Übertragungsqualität der verfügbaren Mitgliedsstrecke eine voreingestellte Bedingung erfüllt;
ein Modul (702) zur dynamischen Anpassung, das konfiguriert ist, die Mehrstreckengruppe gemäß dem Status der verfügbaren Mitgliedsstrecke anzupassen;
wobei das Modul zur dynamischen Anpassung Folgendes umfasst:
eine Herausnahmeeinheit (702-1), die konfiguriert ist, eine Mitgliedsstrecke aus der verfügbaren Mitgliedsstrecke, deren Übertragungsqualität die voreingestellte Bedingung nicht erfüllt, aus der Mehrstreckengruppe herauszunehmen, falls die erste Übertragungsqualitätsbestimmungseinheit bestimmt, dass die Übertragungsqualität der Mitgliedsstrecke die voreingestellte Bedingung nicht erfüllt;
ein Berechnungsmodul (703), das konfiguriert ist, nachdem das Modul zur dynamischen Anpassung die Mehrstreckengruppe angepasst hat, eine aktuelle Bandbreitenauslastung der Mehrstreckengruppe zu berechnen;
ein Beurteilungsmodul (704), das konfiguriert ist zu bestimmen, ob die aktuelle Bandbreitenauslastung einen Bandbreitenschwellenwert übersteigt; und
ein Überlastverarbeitungsmodul (705), das konfiguriert ist, Schutzumschaltung auszulösen, falls das Beurteilungsmodul bestimmt, dass die aktuelle Bandbreitenauslastung den Bandbreitenschwellenwert übersteigt, wodurch in der Schutzumschaltung Datenverkehr, der durch die Mehrstreckengruppe übertragen wird, zu einer Schutz-Mehrstreckengruppe zur Übertragung umgeschaltet wird.

6. Vorrichtung nach Anspruch 5, wobei die Herausnahmeeinheit (702-1) Folgendes umfasst:
eine Kommunikationsuntereinheit (702-1-1), die konfiguriert ist, ein "Peer"-Ende anzuweisen, die Mitgliedsstrecke, deren Übertragungsqualität die voreingestellte Bedingung nicht erfüllt, aus der Mehrstreckengruppe herauszunehmen; und
eine Herausnahmeuntereinheit (702-1-2), die konfiguriert ist, die Mitgliedsstrecke,
deren Übertragungsqualität die voreingestellte Bedingung nicht erfüllt, aus der Mehrstreckengruppe an dem lokalen Ende herauszunehmen.

7. Vorrichtung nach Anspruch 5, wobei das Statusbestimmungsmodul (701) ferner Folgendes umfasst:
eine zweite Übertragungsqualitätsbestimmungseinheit (701-3), die konfiguriert ist zu bestimmen, ob die Übertragungsqualität einer herausgenommenen Mitgliedsstrecke die voreingestellte Bedingung erfüllt; und
falls die Übertragungsqualität der herausgenommenen Mitgliedsstrecke die voreingestellte Bedingung erfüllt, das Modul (702) zur dynamischen Anpassung ferner Folgendes umfasst:
eine Hinzufügungseinheit (702-2), die konfiguriert ist, die herausgenommene Mitgliedsstrecke erneut in die Mehrstreckengruppe hinzuzufügen.

## Revendications

1. Procédé de traitement d'une liaison membre dans un groupe de multiliaisons, comprenant :
la détermination (S101) d'un état d'une liaison membre disponible dans un groupe de multiliaisons ; le réglage (S102) du groupe de multiliaisons en fonction de l'état de la liaison membre disponible ;
dans lequel le réglage (S 102) du groupe de multiliaisons en fonction de l'état de la liaison membre disponible comprend :
si la qualité de transmission d'au moins une liaison membre parmi la liaison membre disponible ne satisfait pas une condition préétablie, la suppression (S102-1) de la liaison membre dont la qualité de transmission ne satisfait pas la condition préétablie du groupe de multiliaisons ;
après le réglage (S 102) du groupe de multiliaisons en fonction de l'état de la liaison membre disponible, le calcul (S103) d'un rapport d'utilisation de largeur de bande courant du groupe de multiliaisons ; et
la détermination (S 105) que le rapport d'utilisation de largeur de bande calculé dépasse ou non un seuil de largeur de bande, et dans l'affirmative, l'exécution d'une commutation de protection, moyennant quoi, dans la commutation de protection, le trafic de données transmis par le biais du groupe de multiliaisons est commuté sur un groupe de multiliaisons de protection en vue de la transmission.

2. Procédé selon la revendication 1, dans lequel la suppression (S102-1) de la liaison membre dont la qualité de transmission ne satisfait pas la condition préétablie du groupe de multiliaisons comprend :
l'instruction (S102-1-1) à une extrémité homologue de supprimer la liaison membre dont la qualité de transmission ne satisfait pas la condition préétablie du groupe de multiliaisons ; et
la suppression (S102-1-2) de la liaison membre dont la qualité de transmission ne satisfait pas la condition préétablie du groupe de multiliaisons à l'extrémité locale.

3. Procédé selon la revendication 1, comprenant, après la suppression (S102-1) de la liaison membre dont la qualité de transmission ne satisfait pas la condition préétablie du groupe de multiliaisons :
la détermination (S 102-2) de la qualité de transmission d'une liaison membre supprimée, et si la qualité de transmission de la liaison membre supprimée satisfait la condition préétablie, l'ajout à nouveau de la liaison membre supprimée dans le groupe de multiliaisons.

4. Procédé selon l'une quelconque des revendications 1 à 3, dans lequel la détermination (S101) d'un état d'une liaison membre disponible dans un groupe de multiliaisons comprend :
la détermination (S101-1) de la liaison membre disponible dans le groupe de multiliaisons ; et
la détermination (S101-2) que la qualité de transmission de la liaison membre disponible satisfait ou non la condition préétablie.

5. Appareil de traitement d'une liaison membre dans un groupe de multiliaisons, comprenant :
un module de détermination d'état (701), configuré pour déterminer un état d'une liaison membre disponible dans un groupe de multiliaisons ;
dans lequel le module de détermination d'état (701) comprend :
une unité de détermination de membre disponible (701-1) configurée pour déterminer la liaison membre disponible dans le groupe de multiliaisons ; et
une première unité de détermination de qualité de transmission (701-2), configurée pour déterminer que la qualité de transmission de la liaison membre disponible satisfait ou non une condition préétablie ;
un module de réglage dynamique (702), configuré pour régler le groupe de multiliaisons en fonction de l'état de la liaison membre disponible ;
dans lequel le module de réglage dynamique comprend :
une unité de suppression (702-1), configurée pour supprimer une liaison membre parmi la liaison membre disponible dont la qualité de transmission ne satisfait pas la condition préétablie du groupe de multiliaisons si la première unité de détermination de qualité de transmission détermine que la qualité de transmission de la liaison membre ne satisfait pas la condition préétablie ;
un module de calcul (703), configuré pour calculer, après le réglage par le module de réglage dynamique du groupe de multiliaisons, un rapport d'utilisation de largeur de bande courant du groupe de multiliaisons ;
un module de jugement (704), configuré pour déterminer que le rapport d'utilisation de largeur de bande calculé dépasse ou non un seuil de largeur de bande ; et
un module de traitement de surcharge (705), configuré pour déclencher une commutation de protection si le module de jugement détermine que le rapport d'utilisation de largeur de bande courant dépasse le seuil de largeur de bande,
moyennant quoi, dans la commutation de protection, le trafic de données transmis par le biais du groupe de multiliaisons est commuté sur un groupe de multiliaisons de protection en vue de la transmission.

6. Appareil selon la revendication 5, dans lequel l'unité de suppression (702-1) comprend :
une sous-unité de communication (702-1-1), configurée pour instruire à une extrémité homologue de supprimer la liaison membre dont la qualité de transmission ne satisfait pas la condition préétablie du groupe de multiliaisons ; et
une sous-unité de suppression (702-1-2), configurée pour supprimer la liaison membre dont la qualité de transmission ne satisfait pas la condition préétablie du groupe de multiliaisons à l'extrémité locale.

7. Appareil selon la revendication 5, dans lequel le module de détermination d'état (701) comprend en outre :
une seconde unité de détermination de qualité de transmission (701-3), configurée pour déterminer que la qualité de transmission d'une liaison membre supprimée satisfait ou non la condition préétablie ; et
si la qualité de transmission de la liaison membre supprimée satisfait la condition préétablie, le module de réglage dynamique (702) comprend en outre :
une unité d'ajout (702-2), configurée pour ajouter à nouveau la liaison membre supprimée dans le groupe de multiliaisons.
